# EUROPEAN PATENT SPECIFICATION

(11) **EP 3 838 474 B1**
(45) Date of publication and mention of the grant of the patent: **19.02.2025**
(21) Application number: 19851917.5
(22) Date of filing: 01.04.2019
(51) Int. Cl.: B23K 35/30, B23K 35/02, B23K 35/40, C22C 38/58, C22C 38/02, C22C 38/44, C22C 38/54, C22C 38/46, C22C 38/48, C22C 38/50, C22C 38/42, C22C 38/06, C22C 38/00, C21D 9/52, C21D 8/06

(54) **SOLID WIRE FOR GAS METAL ARC WELDING**
MASSIVDRAHT ZUM GAS-METALL-LICHTBOGENSCHWEISSEN
FIL SOLIDE POUR LE SOUDAGE À L'ARC DE MÉTAL SOUS PROTECTION GAZEUSE

(30) Priority: 23.08.2018 JP 2018156021
(43) Date of publication of application: 23.06.2021
(73) Proprietor: JFE Steel Corporation, Tokyo 100-0011 (JP); KABUSHIKI KAISHA KOBE SEIKO SHO (KOBE STEEL, LTD.), Hyogo 651-8585 (JP)
(72) Inventor: TAKADA, Atsushi, Tokyo 100-0011 (JP); IZUMI, Daichi, Tokyo 100-0011 (JP); ARAO, Ryo, Tokyo 100-0011 (JP); KOZUKI, Shohei, Tokyo 100-0011 (JP); UEDA, Keiji, Tokyo 100-0011 (JP); HAYAKAWA, Naoya, Tokyo 100-0011 (JP); YAMASHITA, Ken, Fujisawa-shi, Kanagawa 251-8551 (JP); HAN, Peng, Fujisawa-shi, Kanagawa 251-8551 (JP)
(74) Representative: Haseltine Lake Kempner LLP
(86) International application number: PCT/JP2019/014537
(87) International publication number: WO 2020/039643

(56) References cited:
- JP-A- 2016 084 529
- JP-A- H11 197 838
- JP-A- S5 524 701
- KR-A- 20130 003 684
- KR-A- 20160 078 621
- US-A1- 2016 271 739
- US-A1- 2016 273 083
- US-A1- 2017 312 862
- US-A1- 2018 021 895

## Description

### TECHNICAL FIELD

This disclosure relates to a solid wire for gas metal arc welding, particularly to a solid wire for welding high Mn steel materials used in cryogenic temperature environments.

### BACKGROUND

Environmental regulations have been strengthened in recent years. Liquefied natural gas (hereinafter, also referred to as LNG), which does not contain any sulfur, is taken as a clean fuel that does not generate any air pollutants such as sulfide oxides, and the demand on LNG is increasing. To transport or store LNG, a container (tank) for transporting or storing LNG is required to maintain excellent impact toughness at cryogenic temperatures such as a temperature of -162 °C, which is the liquefaction temperature of LNG, or lower.

Because it is necessary to maintain excellent impact toughness at cryogenic temperatures, aluminum alloys, 9 % Ni steel, austenitic stainless steel and the like have been conventionally used as materials of the containers (tanks) and the like.

However, since the aluminum alloys have a low tensile strength, it is necessary to design a structure having a large plate thickness, and there is a problem of poor weldability. In addition, the 9 % Ni steel is economically disadvantageous because it is necessary to use an expensive Ni-based material as a welding material. Further, the austenitic stainless steel is expensive and has a problem that the strength of base material is low.

Because of these problems, the application of high Mn-containing steel containing about 10 % to 35 % of Mn in mass% as a material of containers (tanks) for transporting or storing LNG has recently been studied. The high Mn steel is in an austenitic phase without occurrence of embrittlement fracture even at cryogenic temperatures. In addition, it has a high strength compared with the austenitic stainless steel. Therefore, it is desired to develop a welding material with which such high Mn-containing steel materials can be welded stably.

In response to such a request, JP 2017-502842 A (PTL 1), for example, proposes "a high-strength weld joint having excellent impact toughness at cryogenic temperatures, and a wire for flux cored arc welding for this". The wire for flux cored arc welding described in PTL 1 has a chemical composition containing, in weight%, C: 0.15 % to 0.8 %, Si: 0.2 % to 1.2 %, Mn: 15 % to 34 %, Cr: 6 % or less, Mo: 1.5 % to 4 %, S: 0.02 % or less, P: 0.02 % or less, B: 0.01 % or less, Ti: 0.09 % to 0.5 %, N: 0.001 % to 0.3 %, TiO₂: 4 % to 15 %, a total of at least one selected from the group consisting of SiO₂, ZrO₂ and Al₂O₃: 0.01 % to 9 %, a total of at least one selected from the group consisting of K, Na and Li: 0.5 % to 1.7 %, and at least one of F and Ca: 0.2 % to 1.5 %, with the balance consisting of Fe and inevitable impurities. When welding is performed using the wire for flux cored arc welding described in PTL 1, it is possible to effectively obtain a weld joint having excellent low-temperature toughness where an absorbed energy is 28 J or more in a Charpy impact test at a test temperature of -196 °C, and having high strength where a tensile strength at room temperature is 400 MPa or more. In addition, the wire composition is adjusted to Mo: 1.5 % or more, and a weld joint having excellent hot crack resistance can be secured.

US 2018/021895 A1 discloses a consumable wire electrode, used to construct high Mn steel slurry pipelines for oil sands mining projects.

### CITATION LIST

### Patent Literature

PTL 1: JP 2017-502842 A

### SUMMARY

### (Technical Problem)

However, according to our study, the technique described in PTL 1 has a problem that a large amount of fume is generated during welding, and a welder is exposed to an environment with a large amount of fume.

It could thus be helpful to provide a solid wire for gas metal arc welding, with which a weld joint having both high strength and excellent toughness at cryogenic temperatures can be prepared and which has a small amount of fume during welding and is suitable as a welding material for high Mn steel materials used in cryogenic temperature environments.

As used herein, "having a small amount of fume during welding" means that, when gas metal arc welding is performed in accordance with JIS Z 3930-2013 where the shielding gas composition is 80 % Ar + 20 % CO₂ and the welding current is 250 A, the amount of fume generated is 1200 mg/min or less.

As used herein, "high strength" means that the yield strength at room temperature (0.2 % proof stress) of a weld metal prepared in accordance with JIS Z 3111 is 400 MPa or more, and "excellent toughness at cryogenic temperatures" means that, for a weld metal prepared in accordance with JIS Z 3111, the absorbed energy vE-₁₉₆ is 28 J or more in a Charpy impact test at a test temperature of -196 °C.

### (Solution to Problem)

We first intensively studied factors that affect the amount of fume generated during gas metal arc welding. As a result, we have discovered that it is effective to use a solid wire as a welding material instead of a flux cored wire to significantly reduce the amount of fume. However, a solid wire, which needs more working than a flux cored wire during wire drawing, has a problem that cracks and breaks are likely to occur during the wire drawing, especially in the case of a high Mn-containing chemical composition. To solve this problem, we have discovered that the wire drawing can be performed by suppressing the formation of boron nitride and carbides in steel. Based on these discoveries, we have newly discovered that, by adjusting the chemical composition of the solid wire within the following ranges, especially adjusting C to a special range of 0.2 % to 0.8 %, Si to 0.15 % to 0.9 %, Mn to 17.0 % to 28.0 %, Ni to 0.01 % to 10.0 %, and Cr to 0.4 % to 4.0 %, and Mo to 0.01 % to 3.5 %, and further reducing an impurity B to less than 0.0010 % and carbide-forming elements Ti, Nb and V to 0.04 % or less, no defects such as cracks occur during the wire drawing, the manufacturability of the solid wire is excellent, the amount of fume generated during welding is small, and a weld joint having high strength and excellent impact toughness at cryogenic temperatures, where the yield strength at room temperature (0.2 % proof stress) is a high strength of 400 MPa or more, and the absorbed energy vE-₁₉₆ in a Charpy impact test at a test temperature of -196 °C is 28 J or more, can be manufactured.

The present disclosure is based on the above discoveries and further studies. The invention is defined in the appended claim.

### (Advantageous Effect)

According to the present invention, it is possible to provide a solid wire for gas metal arc welding, wherein the wire has excellent manufacturability, can significantly suppress the amount of fume generated during gas metal arc welding, and, as a welding material for high Mn-containing steel materials, can easily manufacture a weld joint having high strength and excellent toughness at cryogenic temperatures, which has significant advantageous effects in industry.

### DETAILED DESCRIPTION

The solid wire of the present disclosure is a solid wire for gas metal arc welding that is suitable for gas metal arc welding of high Mn-containing steel materials. The solid wire of the present disclosure can weld high Mn-containing steel materials together with a small amount of fume. In addition, a weld metal prepared in accordance with JIS Z 3111 is a weld metal having a high strength of 400 MPa or more of 0.2 % proof stress at room temperature, and having excellent toughness at cryogenic temperatures where an absorbed energy is 28 J or more in a Charpy impact test at a test temperature of -196 °C. The solid wire is a welding material with which a weld joint having high strength and excellent toughness at cryogenic temperatures can be prepared.

The solid wire of the present disclosure has a chemical composition containing, in mass%, C: 0.2 % to 0.8 %, Si: 0.15 % to 0.90 %, Mn: 17.0 % to 28.0 %, P: 0.03 % or less, S: 0.03 % or less, Ni: 0.01 % to 10.00 %, Cr: 0.4 % to 4.0 %, Mo: 0.01 % to 3.50 %, B: less than 0.0010 %, and N: 0.003 % to 0.12 %, as basic components, with the balance consisting of Fe and inevitable impurities.

First, the reasons for limiting the chemical composition will be described. Note that the "mass%" in the chemical composition is simply indicated as "%" in the following description.

### C: 0.2 % to 0.8 %

C is an element having the effect of increasing the strength of the weld metal through solid solution strengthening. C also stabilizes an austenite phase and improves the impact toughness at cryogenic temperatures of the weld metal. To obtain these effects, the C content should be 0.2 % or more. However, if the content is more than 0.8 %, carbides are precipitated, the toughness at cryogenic temperatures is lowered, and hot crack is likely to occur during welding. Therefore, the C content is limited to the range of 0.2 % to 0.8 %. It is preferably 0.4 % to 0.6 %.

### Si: 0.15 % to 0.90 %

Si acts as a deoxidizer and has the effects of increasing the yield of Mn, increasing the viscosity of molten metal, stably maintaining the shape of bead, and reducing the occurrence of spatter. To obtain these effects, the Si content should be 0.15 % or more. However, if the content is more than 0.90 %, the toughness at cryogenic temperatures of the weld metal is lowered. Further, Si segregates during solidification and forms a liquid phase at the interface of solidification cells, which lowers the hot crack resistance. Therefore, the Si content is limited to the range of 0.15 % to 0.90 %. It is preferably 0.2 % to 0.7 %.

### Mn: 17.0 % to 28.0 %

Mn is a low-cost element that stabilizes an austenite phase, and the Mn content in the present disclosure should be 17.0 % or more. If the Mn content is less than 17.0 %, a ferrite phase is formed in the weld metal, and the toughness at cryogenic temperatures is significantly lowered. On the other hand, if the Mn content is more than 28.0 %, excessive Mn segregation occurs during solidification, causing hot crack. Therefore, the Mn content is limited to the range of 17.0 % to 28.0 %. It is preferably 18.0 % to 26.0 %.

### P: 0.03 % or less

P is an element that segregates at grain boundaries and causes hot crack. In the present disclosure, it is preferable to reduce the P content as much as possible, yet a content of 0.03 % or less is acceptable. Therefore, the P content is limited to 0.03 % or less. Excessive reduction leads to a rise in refining cost. Therefore, the P content is preferably adjusted to 0.003 % or more.

### S: 0.03 % or less

S exists as a sulfide-based inclusion MnS in the weld metal. The MnS is a starting point of fracture, which reduces the toughness at cryogenic temperatures. Therefore, the S content is limited to 0.03 % or less. Excessive reduction leads to a rise in refining cost. Therefore, the S content is preferably adjusted to 0.001 % or more.

### Ni: 0.01 % to 10.00 %

Ni is an element that strengthens austenite grain boundaries. Ni segregates at grain boundaries and improves the impact toughness at cryogenic temperatures. To obtain these effects, the Ni content should be 0.01 % or more. In addition, Ni also has the effect of stabilizing an austenite phase. Therefore, further increasing the Ni content can stabilize an austenite phase and improve the impact toughness at cryogenic temperatures of the weld metal. However, Ni is expensive, and a content of more than 10.00 % is economically disadvantageous. Therefore, the Ni content is limited to 0.01 % to 10.00 %.

### Cr: 0.4 % to 4.0 %

Cr acts as an element that stabilizes an austenite phase at cryogenic temperatures, which improves the impact toughness at cryogenic temperatures of the weld metal. Cr also has the effect of improving the strength of the weld metal. In addition, Cr works effectively to increase the liquidus of molten metal and suppress the occurrence of hot crack. Further, Cr works effectively to improve the corrosion resistance of the weld metal. To obtain these effects, the Cr content should be 0.4 % or more. If the Cr content is less than 0.4 %, the above effects cannot be ensured. On the other hand, if the Cr content is more than 4.0 %, Cr carbides are formed, which lowers the toughness at cryogenic temperatures. The formation of carbides also lowers the workability during wire drawing. Therefore, the Cr content is limited to the range of 0.4 % to 4.0 %. It is preferably 0.8 % to 3.0 %.

### Mo: 0.01 % to 3.50 %

Mo is an element that strengthens austenite grain boundaries. Mo segregates at grain boundaries and improves the strength of the weld metal. These effects are remarkable when the Mo content is 0.01 % or more. If the Mo content is more than 0.01 %, it also has the effect of improving the strength of the weld metal through solid solution strengthening. On the other hand, if the Mo content is more than 3.50 %, it is precipitated as carbides, which lowers the manufacturability of the wire such as lowering the hot workability and causing crack during wire drawing. Therefore, the Mo content is limited to the range of 0.01 % to 3.50 %.

### B: less than 0.0010 %

B contained in the steel as an impurity segregates at austenite grain boundaries. When the content of the mixed B is 0.0010 % or more, boron nitride is formed at austenite grain boundaries, which lowers the grain boundary strength. Due to the decrease in grain boundary strength, the austenite grain boundaries become a starting point of fracture and causes breaking during wire drawing, the wire drawing workability is lowered, and the manufacturability of the wire is lowered. Because the formation of boron nitride can be suppressed by limiting the B content to less than 0.0010 %, the B content is limited to less than 0.0010 %. It is preferably 0.0009 % or less and more preferably 0.0008 % or less. Excessive reduction leads to a rise in refining cost. Therefore, the B content is preferably adjusted to 0.0001 % or more.

### N: 0.003 % to 0.12 %

Although N is an inevitably contained element, it acts like C and is an element that effectively contributes to the improvement of the strength of the weld metal, stabilizes an austenite phase, and stably improves the toughness at cryogenic temperatures. These effects are remarkable when the N content is 0.003 % or more, therefore, N is contained in an amount of 0.003 % or more. However, if the N content is more than 0.12 %, nitrides are formed, and the low-temperature toughness is lowered. Therefore, the N content is limited to 0.12 % or less.

The above-mentioned components are the basic components of the solid wire of the present disclosure. In addition to the above-mentioned basic components, the present disclosure can further contain, as selective components if necessary, at least one selected from the group consisting of V: 0.04 % or less, Ti: 0.04 % or less, and Nb: 0.04 % or less, and/or at least one selected from the group consisting of Cu: 1.0 % or less, Al: 0.1 % or less, Ca: 0.01 % or less, and REM: 0.02 % or less.

At least one selected from the group consisting of V: 0.04 % or less, Ti: 0.04 % or less, and Nb: 0.04 % or less

All of V, Ti and Nb are elements that promote the formation of carbides and contribute to the improvement of the strength of the weld metal, and at least one of them can be selected and contained as necessary.

### V: 0.04 % or less

V is a carbide-forming element, which precipitates fine carbides and contributes to the improvement of the strength of the weld metal. To obtain these effects, it is desirable to contain V in an amount of 0.001 % or more. However, if the V content is more than 0.04 %, the carbides are coarsened and become a starting point of crack during wire drawing of the solid wire, which lowers the wire drawing workability and lowers the manufacturability of the wire. Therefore, when V is contained, its content is limited to 0.04 % or less.

### Ti: 0.04 % or less

Ti is a carbide-forming element, which precipitates fine carbides and contributes to the improvement of the strength of the weld metal. In addition, Ti precipitates carbides at the interface of solidification cells of the weld metal and contributes to suppressing the occurrence of hot crack. To obtain these effects, it is desirable to contain Ti in an amount of 0.001 % or more. However, if the Ti content is more than 0.04 %, the carbides are coarsened and become a starting point of crack during wire drawing of the solid wire, the wire drawing workability is lowered, and the manufacturability of the wire is lowered. Therefore, when Ti is contained, its content is limited to 0.04 % or less.

### Nb: 0.04 % or less

Nb is a carbide-forming element, which precipitates carbides and contributes to the improvement of the strength of the weld metal. In addition, Nb precipitates carbides at the interface of solidification cells of the weld metal and contributes to suppressing the occurrence of hot crack. To obtain these effects, it is desirable to contain Nb in an amount of 0.001 % or more. However, if the Nb content is more than 0.04 %, the carbides are coarsened and become a starting point of crack during wire drawing of the solid wire, the wire drawing workability is lowered, and the manufacturability of the wire is lowered. Therefore, when Nb is contained, its content is limited to 0.04 % or less.

At least one selected from the group consisting of Cu: 1.0 % or less, Al: 0.1 % or less, Ca: 0.01 % or less, and REM: 0.02 % or less

Cu is an element that contributes to the stabilization of austenite, Al is an element that improves the welding operability, and Ca and REM are elements that contribute to the improvement of workability, and at least one of them can be selected and contained as necessary.

### Cu: 1.0 % or less

Cu is an element that stabilizes an austenite phase. It stabilizes an austenite phase even at cryogenic temperatures and improves the impact toughness at cryogenic temperatures of the weld metal. To obtain these effects, it is desirable to contain Cu at an amount of 0.01 % or more. However, if it is contained in a large amount exceeding 1.0 %, the hot ductility is lowered, and the manufacturability of the wire is lowered. Therefore, when Cu is contained, its content is limited to 1.0 % or less.

### Al: 0.1 % or less

Al acts as a deoxidizer and has important effects of increasing the viscosity of molten metal, stably maintaining the shape of bead, and reducing the occurrence of spatter. In addition, Al increases the liquidus temperature of molten metal and contributes to suppressing the occurrence of hot crack in the weld metal. These effects are remarkable when the Al content is 0.005 % or more, so that it is desirable to contain Al in an amount of 0.005 % or more. However, if the Al content is more than 0.1 %, the viscosity of molten metal is too high, which conversely increases defects such as increased spatter and incomplete fusion caused by no spreading of bead. Therefore, when Al is contained, its content is limited to the range of 0.1 % or less. It is preferably 0.005 % to 0.06 %.

### Ca: 0.01 % or less

Ca combines with S in molten metal to form a sulfide CaS with a high melting point. Since the CaS has a higher melting point than MnS, it maintains a spherical shape without advancing in the rolling direction during hot working of the solid wire, which advantageously improves the workability of the solid wire. These effects are remarkable when the Ca content is 0.001 % or more. On the other hand, if the Ca content is more than 0.01 %, arc is disturbed during the welding, which renders it difficult to provide stable welding. Therefore, when Ca is contained, its content is limited to 0.01 % or less.

### REM: 0.02 % or less

REM is a powerful deoxidizer and exists in the weld metal in the form of REM oxides. The REM oxides act as a nucleation site during solidification, thereby refining crystal grains and contributing to the improvement of the strength of the weld metal. These effects are remarkable when the REM content is 0.001 % or more. However, if the REM content is more than 0.02 %, the stability of arc is lowered. Therefore, when REM is contained, its content is limited to 0.02 % or less.

The balance other than the above-mentioned components consists of Fe and inevitable impurities.

Next, a method of manufacturing the solid wire of the present disclosure will be described.

The method of manufacturing the solid wire of the present disclosure is not particularly limited as long as molten steel having the chemical composition described above is used and the annealing temperature is 900 °C to 1200 °C, and any common method of manufacturing a solid wire for welding can be applied. That is, it is preferable to sequentially perform a casting process in which molten steel having the chemical composition described above is smelted in a common smelting furnace such as an electric heating furnace or a vacuum melting furnace and cast into a mold having a predetermined shape or the like, then a heating process in which the obtained steel ingot is heated to a predetermined temperature, then a hot rolling process in which the heated steel ingot is subjected to hot rolling to obtain a (rod-shaped) steel material having a predetermined shape, and then a cold rolling process in which the obtained (rod-shaped) steel material is subjected to cold rolling (cold wire drawing) multiple times and annealing as necessary to obtain a wire of desired dimensions.

The following further describes the present disclosure based on Examples.

### EXAMPLES

Molten steel having the chemical composition listed in Table 1 was smelted in a vacuum melting furnace and cast to obtain 1000 kg of steel ingot. The obtained steel ingot was heated to 1200 °C, and then subjected to hot rolling and then cold rolling to obtain a 1.2 mmø solid wire for gas metal arc welding. During the manufacture of the wire, the manufacturability of each solid wire was evaluated by measuring the rolling load (drawing load), observing cracks, observing a cross section of the wire, and the like. When the rolling load (drawing load) was too high to perform a rolling (drawing) process, or when the occurrence of cracks was observed, or when the process could not further continue due to the occurrence of cracks or the like, it was evaluated as "poor". Other cases were evaluated as "good".

Further, a flux cored wire, in which the components of metal powder and flux were adjusted so that the wire had a chemical composition listed in Table 2, was prepared and used as a comparative example. A thin steel sheet (sheet thickness: 0.5 mm) having a chemical composition of 0.1 % C - 0.2 % Si - 0.5 % Mn - balance Fe in mass % was used as a tube. The metal powder and flux whose components had been adjusted were sealed with the tube, and the wire was drawn to a diameter of 1.2 mm. Note that the components listed in Table 2 are the total values of the tube, the metal powder, and the flux.

First, the obtained solid wire or flux cored wire having the chemical composition listed in Table 1 or 2 was used as a welding material, gas metal arc welding was performed in a weld fume collector in accordance with JIS Z 3930, the fume generated was collected by a filter material (made of glass fiber), and the amount of fume generated (mg/min) was measured. The welding conditions were current: 250 A, voltage: 34 V, welding speed: 30 cm/min, shielding gas: 80 % Ar + 20 % CO₂ (flow rate: 20 L/min).

Separately, high Mn steel plates for cryogenic temperatures (plate thickness: 12 mm) were prepared as test plates and butted to form a 45° V groove in accordance with JIS Z 3111. The obtained solid wire was used as a welding material, and gas metal arc welding was performed to obtain a weld metal in the groove. The steel plate used as a test plate was a high Mn steel plate for cryogenic temperatures having a chemical composition of 0.5 % C - 0.4 % Si - 25 % Mn - 3 % Cr - balance Fe in mass%.

The welding was performed using each solid wire (diameter: 1.2 mm) or flux cored wire (diameter: 1.2 mm) having the chemical composition listed in Table 1 or 2 in a flat position without preheating, where the conditions were current: 180 A to 330 A (DCEP), voltage: 24 V to 33 V, welding speed: 30 cm/min, interpass temperature: 100 °C to 150 °C, shielding gas: 80 % Ar + 20 % CO₂.

After the welding, the weld metal was observed with an optical microscope to determine the presence or absence of weld cracks. When occurrence of cracks was observed, the hot crack resistance was low because the cracks were occurred owing to hot cracking, and it was evaluated as "poor". When no cracks was observed, the hot crack resistance was excellent, and it was evaluated as "good".

The appearance of bead was visually observed and evaluated. When undercut, overlap, or pit was observed, the appearance of weld bead was evaluated as "poor". When none of the above mentioned was observed, the appearance of bead was evaluated as "good".

A tensile test piece of the weld metal (parallel part diameter: 6 mmø) and a Charpy impact test piece of the weld metal (V notch) were collected from the obtained weld metal in accordance with JIS Z 3111, and the test pieces were subjected to a tensile test and an impact test.

The tensile test was performed at room temperature for three times for each weld metal, and an average value of the obtained values (0.2 % proof stress) was taken as the tensile property of the weld metal using the solid wire. In addition, the Charpy impact test was performed for three times for each weld metal to determine an absorbed energy vE-₁₉₆ at a test temperature of -196 °C. An average value was taken as the impact toughness at cryogenic temperatures of the weld metal using the solid wire.

The results are listed in Table 3.

**Table 1**

| Steel No. | Chemical composition (mass%) | | | | | | | | | | | | Remarks |
|---|---|---|---|---|---|---|---|---|---|---|---|---|---|
| | C | Si | Mn | P | S | Ni | Cr | Mo | B | N | V,Ti,Nb | Cu,Al,Ca,REM | |
| A | 0.59 | 0.37 | 27.0 | 0.012 | 0.021 | 2.46 | 0.5 | 1.51 | 0.0009 | 0.020 | - | - | Conforming Example |
| B | 0.65 | 0.58 | 18.2 | 0.026 | 0.016 | 0.05 | 3.7 | 1.25 | 0.0007 | 0.100 | - | - | Conforming Example |
| C | 0.28 | 0.42 | 23.4 | 0.005 | 0.024 | 6.91 | 2.4 | 0.01 | 0.0006 | 0.081 | - | - | Conforming Example |
| D | 0.31 | 0.26 | 18.2 | 0.017 | 0.028 | 2.12 | 0.8 | 2.13 | 0.0004 | 0.004 | - | - | Conforming Example |
| E | 0.43 | 0.41 | 20.4 | 0.021 | 0.013 | 4.17 | 1.4 | 1.54 | 0.0006 | 0.013 | V:0.02, Ti:0.03 | - | Conforming Example |
| F | 0.71 | 0.72 | 27.1 | 0.016 | 0.008 | 7.12 | 2.7 | 0.05 | 0.0008 | 0.112 | Nb:0.02 | - | Conforming Example |
| G | 0.39 | 0.21 | 24.2 | 0.013 | 0.015 | 1.28 | 0.8 | 2.81 | 0.0009 | 0.050 | - | Cu:0.12, Al:0.05 | Conforming Example |
| H | 0.75 | 0.48 | 18.2 | 0.017 | 0.027 | 4.81 | 1.1 | 3.20 | 0.0005 | 0.006 | - | Al:0.02 | Conforming Example |
| I | 0.51 | 0.17 | 17.1 | 0.025 | 0.008 | 8.77 | 1.2 | 1.84 | 0.0004 | 0.005 | - | Al:0.03, REM:0.011 | Conforming Example |
| J | 0.27 | 0.82 | 23.8 | 0.016 | 0.024 | 0.02 | 1.6 | 3.05 | 0.0003 | 0.008 | - | REM:0.006 | Conforming Example |
| K | 0.36 | 0.37 | 24.8 | 0.009 | 0.017 | 2.31 | 0.9 | 1.51 | 0.0008 | 0.011 | Ti:0.02 | Ca:0.001 | Conforming Example |
| L | 0.45 | 0.75 | 21.6 | 0.016 | 0.016 | 3.60 | 1.1 | 0.12 | 0.0007 | 0.012 | Ti:0.01, Nb0.04 | Cu:0.81, REM:0.018 | Conforming Example |
| M | 0.48 | 0.44 | 17.2 | 0.023 | 0.009 | 6.25 | 3.5 | 0.32 | 0.0006 | 0.090 | V:0.01 | Ca:0.006 | Conforming Example |
| N | 0.14 | 0.30 | 18.1 | 0.014 | 0.010 | 1.41 | 0.6 | 0.04 | 0.0008 | 0.080 | Nb:0.01 | - | Comparative Example |
| O | 0.25 | 0.53 | 20.5 | 0.016 | 0.019 | 1.27 | 0.3 | 0.05 | 0.0003 | 0.005 | V:0.04, Ti:0.02 | - | Comparative Example |
| P | 0.37 | 0.46 | 40.3 | 0.018 | 0.027 | 0.04 | 3.5 | 0.60 | 0.0005 | 0.120 | - | Ca:0.002, REM:0.006 | Comparative Example |
| Q | 0.46 | 0.28 | 24.6 | 0.013 | 0.024 | 0.08 | 3.7 | 2.78 | 0.0007 | 0.090 | Ti:0.05 | Ca:0.001 | Comparative Example |
| R | 0.51 | 0.38 | 19.2 | 0.021 | 0.015 | 2.51 | 1.2 | 1.54 | 0.0011 | 0.080 | - | - | Comparative Example |
| S | 0.39 | 0.72 | 24.6 | 0.007 | 0.021 | 6.13 | 4.9 | 0.82 | 0.0004 | 0.004 | V0.02, Nb:0.06 | - | Comparative Example |
| T | 0.42 | 0.27 | 12.8 | 0.012 | 0.008 | 3.14 | 1.4 | 1.24 | 0.0005 | 0.050 | V:0.01 | - | Comparative Example |
| U | 0.39 | 0.62 | 26.2 | 0.026 | 0.021 | <0.001 | 2.8 | <0.001 | 0.0007 | 0.042 | - | Al:0.02 | Comparative Example |
| V | 0.53 | 1.50 | 18.8 | 0.025 | 0.013 | 4.72 | 1.5 | 0.36 | 0.0003 | 0.080 | Ti:0.02 | Cu:0.21, Ca:0.001 | Comparative Example |
| W | 0.42 | 0.25 | 18.2 | 0.038 | 0.012 | 1.29 | 2.7 | 1.28 | 0.0007 | 0.090 | - | Ca:0.007, REM:0.013 | Comparative Example |
| X | 0.96 | 0.42 | 26.2 | 0.008 | 0.006 | 3.14 | 0.8 | 1.88 | 0.0005 | 0.012 | - | - | Comparative Example |
| Y | 0.47 | 0.07 | 19.7 | 0.016 | 0.014 | 1.76 | 0.9 | 0.84 | 0.0008 | 0.070 | - | Al:0.03 | Comparative Example |
| Z | 0.36 | 0.47 | 20.4 | 0.012 | 0.008 | 6.29 | 1.4 | 0.86 | 0.0007 | 0.005 | - | Al:0.15 | Comparative Example |

**Table 2**

| Wire No. | Chemical composition (mass%) | | | | | | | | | | | | Remarks |
|---|---|---|---|---|---|---|---|---|---|---|---|---|---|
| | C | Si | Mn | P | S | Ni | Cr | Mo | B | N | V,Ti,Nb | Cu,Al,Ca,REM | |
| 27 | 0.55 | 0.34 | 26.1 | 0.012 | 0.008 | 2.12 | 0.7 | 1.21 | 0.0008 | 0.020 | - | - | Comparative Example |
| 28 | 0.61 | 0.55 | 18.8 | 0.024 | 0.015 | 0.05 | 3.2 | 1.22 | 0.0007 | 0.081 | - | - | Comparative Example |
| 29 | 0.29 | 0.41 | 23.2 | 0.005 | 0.024 | 6.82 | 2.4 | 0.01 | 0.0005 | 0.046 | - | - | Comparative Example |
| 30 | 0.34 | 0.28 | 18.2 | 0.016 | 0.026 | 2.19 | 0.7 | 2.11 | 0.0004 | 0.015 | - | - | Comparative Example |

**Table 3**

| Wire No. | Steel No. | Wire manufacturability | Hot crack resistance | Fume generation property* | Weld bead appearance | Weld metal property** | | Remarks |
|---|---|---|---|---|---|---|---|---|
| | | | | Amount of fume (mg/min) | | 0.2% proof stress (MPa) | Absorbed energy vE₋₁₉₆ (J) | |
| 1 | A | Good | Good | 746 | Good | 473 | 52 | Example |
| 2 | B | Good | Good | 573 | Good | 515 | 49 | Example |
| 3 | C | Good | Good | 673 | Good | 503 | 82 | Example |
| 4 | D | Good | Good | 568 | Good | 442 | 48 | Example |
| 5 | E | Good | Good | 614 | Good | 483 | 39 | Example |
| 6 | F | Good | Good | 752 | Good | 562 | 76 | Example |
| 7 | G | Good | Good | 688 | Good | 487 | 62 | Example |
| 8 | H | Good | Good | 572 | Good | 539 | 51 | Example |
| 9 | I | Good | Good | 546 | Good | 519 | 43 | Example |
| 10 | J | Good | Good | 685 | Good | 498 | 73 | Example |
| 11 | K | Good | Good | 701 | Good | 460 | 70 | Example |
| 12 | L | Good | Good | 641 | Good | 434 | 68 | Example |
| 13 | M | Good | Good | 550 | Good | 527 | 81 | Example |
| 14 | N | Good | Good | 565 | Good | 364 | 42 | Comparative Example |
| 15 | O | Good | Good | 616 | Good | 367 | 86 | Comparative Example |
| 16 | P | Poor | -*** | -*** | -*** | -*** | -*** | Comparative Example |
| 17 | Q | Poor | -*** | -*** | -*** | -*** | -*** | Comparative Example |
| 18 | R | Poor | -*** | -*** | -*** | -*** | -*** | Comparative Example |
| 19 | S | Poor | -*** | -*** | -*** | -*** | -*** | Comparative Example |
| 20 | T | Good | Good | 520 | Good | 434 | 12 | Comparative Example |
| 21 | U | Good | Good | 732 | Good | 461 | 15 | Comparative Example |
| 22 | V | Good | Poor | 593 | Good | 470 | 82 | Comparative Example |
| 23 | W | Good | Poor | 568 | Good | 481 | 71 | Comparative Example |
| 24 | X | Good | Poor | 733 | Good | 518 | 38 | Comparative Example |
| 25 | Y | Good | Good | 597 | Poor | 424 | 58 | Comparative Example |
| 26 | Z | Good | Good | 614 | Poor | 478 | 71 | Comparative Example |
| 27 | - | Good | Good | 1656 | Good | 458 | 51 | Comparative Example |
| 28 | - | Good | Good | 1369 | Good | 489 | 56 | Comparative Example |
| 29 | - | Good | Good | 1539 | Good | 494 | 79 | Comparative Example |
| 30 | - | Good | Good | 1337 | Good | 441 | 48 | Comparative Example |

| | | | | | | | | |
|---|---|---|---|---|---|---|---|---|
| *) in accordance with JIS Z 3930-2013 **) in accordance with JIS Z 3111 ***) could not be measured | | | | | | | | |

All the Examples have excellent wire manufacturability. In addition, for all the Examples, the amount of fume generated is 1200 mg/min or less when gas metal arc welding is performed with a welding current of 250 A in accordance with JIS Z 3930-2013, so they are welding materials with a small amount of fume.

Further, all the Examples have excellent hot crack resistance, with no welding cracks (hot crack) observed during the welding. Moreover, for all the Examples, the yield strength (0.2 % proof stress) at room temperature is 400 MPa or more, and the absorbed energy vE-₁₉₆ in the Charpy impact test at a test temperature of -196 °C is 28 J or more, so they are welding materials (solid wires) with which a weld metal having both high strength and excellent toughness at cryogenic temperatures can be obtained.

On the other hand, for the Comparative Examples outside the range of the present disclosure, the amount of fume is more than 1200 mg/min, or the manufacturability of the wire is poor, or welding cracks (hot crack) occurs and the hot crack resistance is poor, or the weld bead is defective, or the 0.2 % proof stress at room temperature is less than 400 MPa, or the absorbed energy vE-₁₉₆ is less than 28. With the Comparative Examples, it is impossible to obtain a desired weld metal having a small amount of fume during welding and having both high strength and excellent toughness at cryogenic temperatures.

For wires No. 14 and No. 15 (Comparative Examples), the C and Cr contents are lower than the range of the present disclosure. Therefore, the 0.2 % proof stress of the weld metal is less than 400 MPa, and the desired high strength cannot be secured. For wires No. 16, No. 17, No. 18, and No. 19 (Comparative Examples), the Mn or Ti, B, Cr, and Nb contents are higher than the range of the present disclosure. Therefore, the wire drawing workability is lowered, and the wire cannot be drawn to a desired wire diameter. For wire No. 20 (Comparative Example), the Mn content is lower than the range of the present disclosure, leading to an unstable austenite phase. Therefore, the absorbed energy vE-₁₉₆ is less than 28 J, and the toughness at cryogenic temperatures is low. For wire No. 21 (Comparative Example), the Ni content is lower than the range of the present disclosure. Therefore, the absorbed energy vE-₁₉₆ is less than 28 J, and the toughness at cryogenic temperatures is low. For wires No. 22, No. 23, and No. 24 (Comparative Examples), the Si, P, and C contents are higher than the range of the present disclosure. Therefore, welding crack occurs, and the hot crack resistance is low. For wire No. 25 (Comparative Example), the Si content is lower than the range of the present disclosure, and for wire No. 26 (Comparative Example), the Al content is higher than the range of the present disclosure. Therefore, they cannot obtain a good bead shape, and pit or overlap occurs. Wires No. 27, No. 28, No. 29, and No. 30, which are Comparative Examples, are flux cored wires, so that the amount of fume is larger than 1200 mg/min.

## Claims

1. A solid wire for gas metal arc welding, having a chemical composition containing, in mass%:
C: 0.2 % to 0.8 %,
Si: 0.15 % to 0.90 %,
Mn: 17.0 % to 28.0 %,
P: 0.03 % or less,
S: 0.03 % or less,
Ni: 0.01 % to 10.00 %,
Cr: 0.4 % to 4.0 %,
Mo: 0.01 % to 3.50 %,
B: less than 0.0010 %, and
N: 0.003 % to 0.12 %, and
optionally at least one selected from the group consisting of V: 0.04 % or less, Ti: 0.04 % or less, Nb: 0.04 % or less, Cu: 1.0 % or less, Al: 0.1 % or less, Ca: 0.01 % or less, and REM: 0.02 % or less,
with the balance consisting of Fe and inevitable impurities.

## Patentansprüche

1. Massivdraht zum Gas-Metall-Lichtbogenschweißen mit einer chemischen Zusammensetzung, enthaltend, in Masse-%:
C: 0,2 % bis 0,8 %,
Si: 0,15 % bis 0,90 %,
Mn: 17,0 % bis 28,0 %,
P: 0,03 % oder weniger,
S: 0,03 % oder weniger,
Ni: 0,01 % bis 10,00 %,
Cr: 0,4 % bis 4,0 %,
Mo: 0,01 % bis 3,50 %,
B: weniger als 0,0010 % und
N: 0,003 % bis 0,12 % und
optional mindestens eines aus der Gruppe ausgewählt, bestehend aus V: 0,04 % oder weniger, Ti: 0,04 % oder weniger, Nb: 0,04 % oder weniger, Cu: 1,0 % oder weniger, Al: 0,1 % oder weniger, Ca: 0,01 % oder weniger und REM: 0,02 % oder weniger,
wobei der Rest aus Fe und unvermeidlichen Verunreinigungen besteht.

## Revendications

1. Fil solide pour le soudage à l'arc de métal sous protection gazeuse, ayant une composition chimique contenant, en % en masse :
C : 0,2 % à 0,8 %,
Si : 0,15 % à 0,90 %,
Mn : 17,0 % à 28,0 %,
P : 0,03 % ou moins,
S : 0,03 % ou moins,
Ni : 0,01 % à 10,00 %,
Cr : 0,4 % à 4,0 %,
Mo : 0,01 % à 3,50 %,
B : moins de 0,0010 %, et
N : 0,003 % à 0,12 %, et
éventuellement au moins un élément choisi dans le groupe constitué par V : 0,04 % ou moins, Ti : 0,04 % ou moins, Nb : 0,04 % ou moins, Cu : 1,0 % ou moins, Al : 0,1 % ou moins, Ca : 0,01 % ou moins, et REM : 0,02 % ou moins,
la balance étant constituée de Fe et d'impuretés inévitables.
